# FASCICULE DE BREVET EUROPEEN

(11) **EP 3 761 420 B1**
(45) Date de publication et mention de la délivrance du brevet: **16.03.2022**
(21) Numéro de dépôt: 20183382.9
(22) Date de dépôt: 01.07.2020
(51) Int. Cl.: H01M 8/0213, H01M 8/0221, H01M 8/0226, H01M 8/0228, H01M 8/0239, H01M 8/0243, H01M 8/0245, H01M 8/0258, H01M 8/1018

(54) **DISPOSITIF DE DIFFUSION GAZEUSE POUR RÉDUIRE LES PERTES DE CHARGE**
GASDIFFUSIONSVORRICHTUNG ZUR REDUZIERUNG DER DRUCKVERLUSTE
GAS DIFFUSION DEVICE FOR REDUCING PRESSURE LOSSES

(30) Priorité: 01.07.2019 FR 1907259
(43) Date de publication de la demande: 06.01.2021
(73) Titulaire: Commissariat à l'énergie atomique et aux énergies alternatives, 75015 Paris (FR)
(72) Inventeur: POIROT-CROUVEZIER, Jean-Philippe, 38054 GRENOBLE Cedex 9 (FR); ROUILLON, Ludovic, 38054 GRENOBLE Cedex 9 (FR)
(74) Mandataire: INNOV-GROUP

(56) Documents cités:
- WO-A1-2018/111968
- US-A1- 2005 255 365
- US-A1- 2007 128 464
- US-A1- 2011 244 358
- US-A1- 2017 179 498

## Description

L'invention concerne la fabrication des réacteurs électrochimiques, et en particulier la fabrication de dispositifs de diffusion gazeuse pour des réacteurs électrochimiques.

Parmi les réacteurs électrochimiques, les piles à combustible connaissent d'importants développements. Les piles à combustible sont notamment envisagées comme source d'énergie pour des véhicules automobiles produits à grande échelle dans le futur ou comme sources d'énergie auxiliaire dans l'aéronautique. Une pile à combustible est un dispositif électrochimique qui convertit de l'énergie chimique directement en énergie électrique. Une pile à combustible comprend un empilement en série de plusieurs cellules. Chaque cellule génère typiquement une tension de l'ordre de 1 Volt, et leur empilement permet de générer une tension d'alimentation d'un niveau plus élevé, par exemple de l'ordre d'une centaine de volts.

Parmi les types de piles à combustible connus, on peut notamment citer la pile à combustible à membrane échangeuse de protons, dite PEM, fonctionnant à basse température. De telles piles à combustible présentent des propriétés de compacité particulièrement intéressantes. Chaque cellule comprend une membrane électrolytique permettant seulement le passage de protons et non le passage des électrons. La membrane comprend une anode sur une première face et une cathode sur une deuxième face pour former un assemblage membrane/électrodes dit AME.

Au niveau de l'anode, du dihydrogène utilisé comme carburant est oxydé pour produire des protons traversant la membrane. La membrane forme ainsi un conducteur ionique. Les électrons produits par cette réaction migrent vers une plaque d'écoulement, puis traversent un circuit électrique externe à la cellule pour former un courant électrique. Au niveau de la cathode, de l'oxygène est réduit et réagit avec les protons pour former de l'eau.

La pile à combustible peut comprendre plusieurs plaques dites bipolaires, par exemple en métal, empilées les unes sur les autres. La membrane est disposée entre deux plaques bipolaires.

Les plaques bipolaires sont électriquement conductrices pour collecter des électrons générés au niveau de l'anode. Les plaques bipolaires ont également une fonction de séparateur étanche entre l'écoulement anodique et l'écoulement cathodique. Les plaques bipolaires ont également une fonction mécanique de transmission des efforts de serrage de l'empilement, nécessaire à la qualité du contact électrique. Une conduction électronique est réalisée à travers les plaques bipolaires, une conduction ionique étant obtenue à travers la membrane.

Selon une conception, l'écoulement des réactifs est guidé par des canaux d'écoulement de tôles métalliques embouties, soudées pour former des plaques bipolaires. Les tôles métalliques présentent de bonnes propriétés mécaniques et forment des barrières efficaces pour limiter la diffusion du dihydrogène. Les tôles métalliques ont cependant une résistance réduite à la corrosion. De plus, leur dégradation peut former des cations qui viennent polluer la membrane et altère les performances et la durée de vie de la pile à combustible. Afin de réduire ces problèmes, des traitements de surface des tôles métalliques sont fréquemment mis en œuvre. Cependant, ces traitements de surface améliorent insuffisamment la résistance à la corrosion pour certaines applications et induisent un surcoût non négligeable. Par ailleurs, la conception de plaques bipolaires présentant des canaux d'écoulement définis par emboutissage présentent l'inconvénient d'avoir des dimensions de canaux contraintes par le procédé d'emboutissage. Des dimensions minimales doivent ainsi être respectées pour la largeur des canaux d'écoulement ou pour la largeur des nervures de séparation entre les canaux d'écoulement. L'homogénéisation de la densité de courant à travers l'empilement de la pile à combustible n'est donc pas optimale.

Un des freins à la diffusion de la technologie des piles à combustible tient au coût de fabrication et d'assemblage de leurs différents composants. La fabrication des plaques bipolaires selon cette conception représente notamment la majeure partie du coût d'une pile à combustible.

Selon une autre conception, la plaque bipolaire est lisse et l'écoulement et l'homogénéisation des réactifs sont réalisés à travers des couches de diffusion gazeuse interposées entre les plaques bipolaires et l'assemblage membrane/électrodes. Les produits de réaction et les espèces non réactives sont évacués par entraînement par l'écoulement jusqu'à la sortie des couches de diffusion gazeuse. Les couches de diffusion gazeuse se présentent sous forme de couches poreuses à porosités ouvertes, par exemple sous la forme de feutre ou de tissus de carbone.

Les couches de diffusion gazeuse doivent présenter une épaisseur suffisante pour réduire les pertes de charge de l'écoulement de réactif, ce qui accroît l'encombrement de la pile à combustible. De plus, les plaques bipolaires sont relativement lourdes pour certaines applications. En outre, il s'avère souhaitable de fixer une couche de diffusion gazeuse à la plaque bipolaire. Par ailleurs, la résistance électrique de contact entre une couche de diffusion gazeuse et une plaque bipolaire reste relativement élevée. US 2007/128464 A1 et US 2005/255365 A1 décrivent des dispositifs de diffusion gazeuse comprenant plusieurs couches.

L'invention vise à résoudre un ou plusieurs de ces inconvénients. L'invention porte ainsi sur un dispositif de diffusion gazeuse, tel que défini dans les revendications annexées.

L'invention porte également sur les variantes des revendications dépendantes. L'homme du métier comprendra que chacune des caractéristiques de la description ou des revendications dépendantes peut être combinée indépendamment aux caractéristiques d'une revendication indépendante, sans pour autant constituer une généralisation intermédiaire.

L'invention concerne encore un procédé de fabrication d'un dispositif de diffusion gazeuse, tel que défini dans les revendications dépendantes.

D'autres caractéristiques et avantages de l'invention ressortiront clairement de la description qui en est faite ci-après, à titre indicatif et nullement limitatif, en référence aux dessins annexés, dans lesquels :
[Fig. 1] est une vue en perspective éclatée d'un exemple d'empilement d'assemblages membrane/électrodes et de plaques bipolaires pour une pile à combustible ;
[Fig. 2] et
[Fig. 3] sont des vues en coupe d'un dispositif de diffusion gazeuse à une couche poreuse à évidements et conductrice électriquement selon un exemple illustratif, dont on détaille les étapes du procédé de fabrication ;
[Fig. 4] est une vue de dessus partielle du dispositif de diffusion gazeuse à une couche poreuse à évidements et conductrice électriquement de l'exemple illustratif ;
[Fig. 5] est une vue de dessus partielle d'une couche poreuse à évidements et conductrice électriquement selon une variante de l'exemple illustratif ;
[Fig. 6] est une vue de dessus partielle d'une couche poreuse à évidements et conductrice électriquement selon une autre variante de l'exemple illustratif ;
[Fig. 7] est une vue de dessus partielle d'une couche poreuse à évidements et conductrice électriquement selon une autre variante de l'exemple illustratif ;
[Fig. 8] est une vue de dessus partielle d'une couche poreuse à évidements et conductrice électriquement selon une autre variante de l'exemple illustratif ;
[Fig. 9],
[Fig. 10],
[Fig. 11],

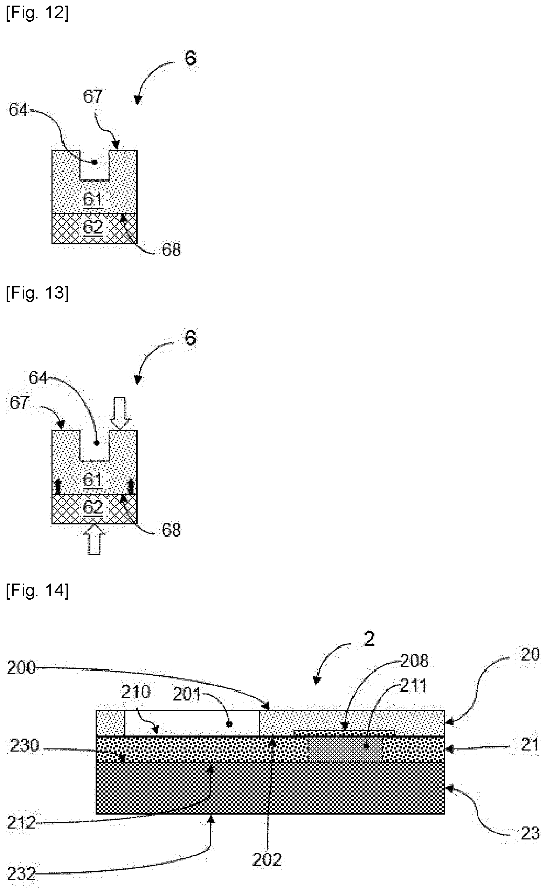

[Fig. 12] et
[Fig. 13] sont des vues en coupe d'un dispositif de diffusion gazeuse à évidement selon un autre exemple illustratif, dont les différentes étapes du procédé de fabrication sont détaillées ;
[Fig. 14],

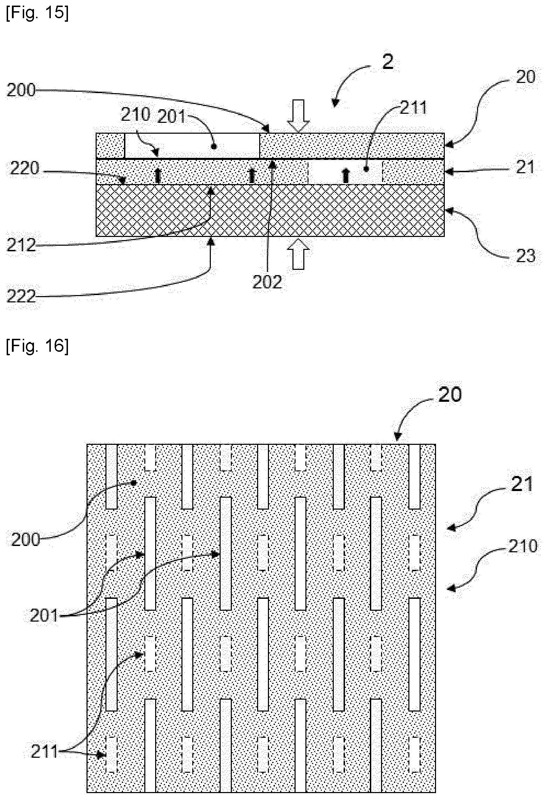

[Fig. 15] sont des vues en coupe d'un dispositif de diffusion gazeuse à deux couches poreuses à évidements et conductrices électriquement selon un mode de réalisation de l'invention, dont les différentes étapes du procédé de fabrication sont détaillées ;
[Fig. 16] est une vue de dessus partielle du dispositif de diffusion gazeuse à deux couches poreuses de la figure 14 ;

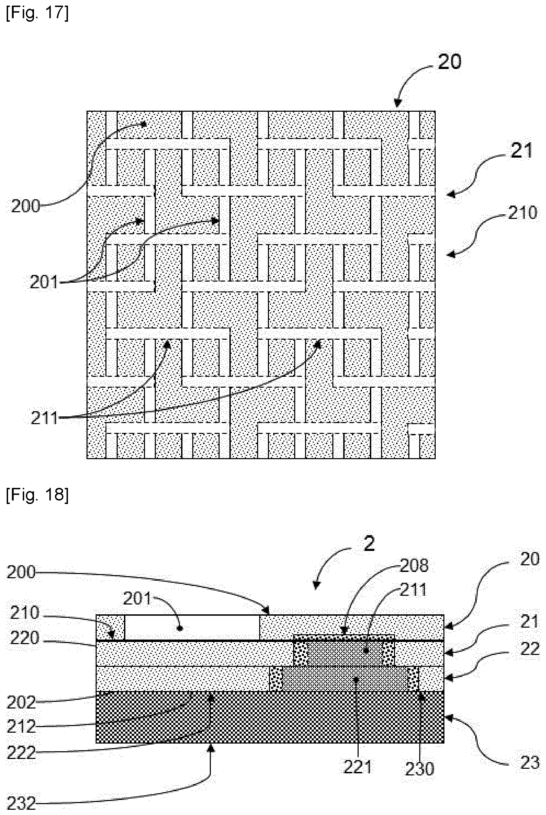

[Fig. 17] est une vue de dessus partielle d'un dispositif de diffusion gazeuse selon une variante du troisième mode de réalisation ;
[Fig. 18] est une vue en coupe d'un dispositif de diffusion gazeuse à trois couches poreuses à évidements et conductrices électriquement selon un autre mode de réalisation de l'invention ;

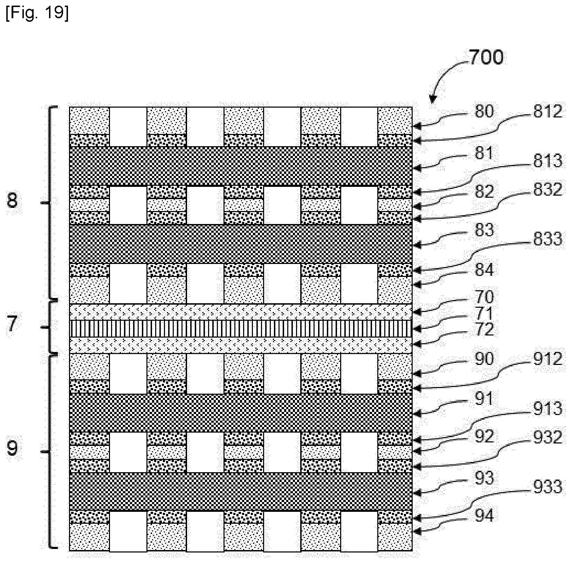

[Fig. 19] et

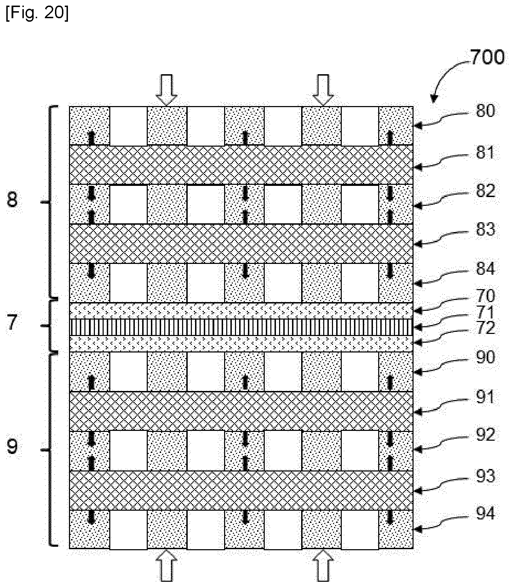

[Fig. 20] sont des vues en coupe partielles d'un système électrochimique incluant des dispositifs de diffusion gazeuse selon l'invention à l'issue et durant son procédé de fabrication.

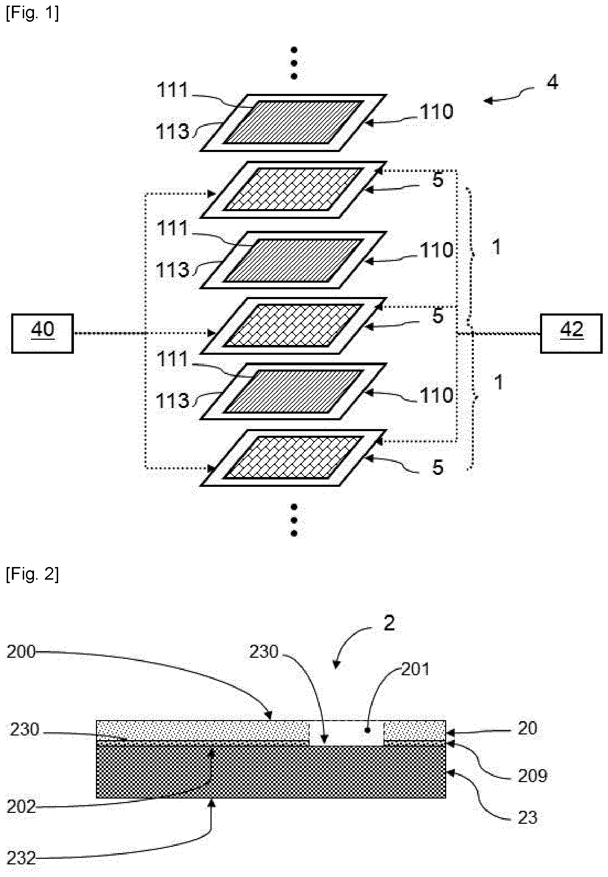

La figure 1 est une vue en perspective éclatée schématique d'un empilement de cellules 1 d'une pile à combustible 4. La pile à combustible 4 comprend plusieurs cellules 1 superposées. Les cellules 1 sont du type à membrane échangeuse de protons ou membrane à électrolyte polymère.

La pile à combustible 4 comprend une source de carburant 40. La source de carburant 40 alimente ici en dihydrogène une entrée de chaque cellule 1. La pile à combustible 4 comprend également une source de comburant 42. La source de comburant 42 alimente ici en air une entrée de chaque cellule 1, l'oxygène de l'air étant utilisé comme oxydant. Chaque cellule 1 comprend également des canaux d'échappement. Une ou plusieurs cellules 1 présentent également un circuit de refroidissement.

Chaque cellule 1 comprend un assemblage membrane/électrodes 110 ou AME 110. Un assemblage membrane/électrodes 110 comprend un électrolyte 113, une cathode (non illustrée) et une anode 111 placées de part et d'autre de l'électrolyte et fixées sur cet électrolyte 113. La couche d'électrolyte 113 forme une membrane semi-perméable permettant une conduction protonique tout en étant imperméable aux gaz présents dans la cellule. La couche d'électrolyte empêche également un passage des électrons entre l'anode 111 et la cathode.

Entre chaque couple d'AME adjacents, une plaque bipolaire 5 est disposée. Chaque plaque bipolaire 5 définit des canaux d'écoulement anodiques et des canaux d'écoulement cathodiques sur des faces externes opposées. Des plaques bipolaires 5 définissent avantageusement également des canaux d'écoulement de liquide de refroidissement entre deux assemblages membrane/électrodes successifs.

De façon connue en soi, durant le fonctionnement de la pile à combustible 4, de l'air s'écoule entre une AME et une plaque bipolaire, et du dihydrogène s'écoule entre cette AME et une autre plaque bipolaire. Au niveau de l'anode, le dihydrogène est oxydé pour produire des protons qui traversent l'AME. Au niveau de la cathode, de l'oxygène est réduit et réagit avec les protons pour former de l'eau. Les électrons produits par l'oxydation de l'hydrogène sont collectés par une plaque bipolaire 5. Les électrons produits sont ensuite appliqués sur une charge électrique connectée à la pile à combustible 1 pour former un courant électrique. Durant son fonctionnement, une cellule de la pile à combustible génère usuellement une tension continue entre l'anode et la cathode de l'ordre de 1V.

L'empilement peut également comprendre des joints d'étanchéité périphériques et des renforts de membrane non illustrés ici. Chaque cellule 1 peut en outre comprendre une couche de diffusion gazeuse (non illustrée) disposée entre l'anode et une plaque bipolaire, et une autre couche de diffusion gazeuse disposée entre la cathode et une autre plaque bipolaire.

Des couches de matériaux composites sont fréquemment commercialisées sous la forme de fibres pré-imprégnées de résine polymérisable. Ces couches de matériaux composites sont fréquemment distribuées sous la forme de rouleaux ou de bobines. Les fibres de renforcement telles que les fibres de carbone sont conductrices électriquement.

Les couches de matériaux composites utilisant des fibres pré-imprégnées présentent l'avantage d'être facilement déformables pour être mises en forme avant la polymérisation de la résine. La polymérisation de la résine rend ensuite ces couches très rigides. L'invention vise à tirer parti d'un certain nombre de propriétés de telles fibres pré-imprégnées dans la formation de dispositifs de diffusion gazeuse pouvant par exemple être associés à des plaques bipolaires.

L'invention propose un dispositif de diffusion gazeuse. L'invention propose une superposition d'une couche de matériau composite, incluant des fibres conductrices électriquement et une résine polymérisée imprégnant ces fibres, avec une couche conductrice électriquement présentant une porosité ouverte entre des première et deuxième faces opposées. Un évidement est ménagé au niveau de la deuxième face, la première face étant en contact électrique avec les fibres conductrices de la couche de matériau composite, la résine polymérisée enrobant une partie de la couche conductrice au niveau de cette première face.

Ainsi, on assure une liaison mécanique entre la couche de matériau composite et la couche conductrice électriquement, on assure une connexion électrique optimale entre la couche conductrice électriquement et la couche de matériau composite, et on réduit les pertes de charge à l'écoulement dans le plan de la couche conductrice électriquement car cet écoulement peut également s'établir à travers l'évidement. En outre, le dispositif de diffusion gazeuse ainsi formé bénéficie de la rigidité du matériau composite.

La figure 2 est une vue en coupe partielle d'un dispositif de diffusion gazeuse 2, selon un exemple illustratif. Le dispositif 2 inclut une couche 20 à porosité ouverte, et électriquement conductrice. La porosité de la couche 20 est ouverte. La couche 20 présente par ailleurs :
- une face inférieure 202 ;
- un évidement 201 ménagé au niveau d'une face supérieure 200 de la couche 20. L'évidement 201 est ici traversant entre les faces 200 et 202 ;
- une zone 209 d'épaisseur inférieure à l'épaisseur totale de la couche 20, dont la face inférieure est la face 202, contenant une résine polymérisée.
La couche poreuse 20 présente avantageusement une épaisseur inférieure à 0,5 mm.

Le dispositif 2 inclut également une couche de matériau composite 23 incluant des fibres conductrices électriquement, avantageusement en carbone ; la couche 23 présente une face supérieure 230 et une face inférieure 232. Une résine polymérisée enrobe les fibres. La résine polymérisée est par exemple une résine de type phénolique. Une telle résine polymérisée est étanche à l'hydrogène, qui peut être un des réactifs devant traverser le dispositif 2. La résine étant polymérisée, la couche 23 forme une couche composite rigide. La couche composite 23 est conductrice électriquement dans son épaisseur.

Le dispositif 2 est rigide, conducteur et d'un seul tenant. Le dispositif 2 inclut une superposition des éléments précédemment décrits :
- la couche poreuse 20 est située à une extrémité externe de l'empilement, présentant un évidement 201 ouvert ;
- la couche en matériau composite 23 est située à une extrémité externe opposée de l'empilement, les faces 202 et 230 étant en contact.

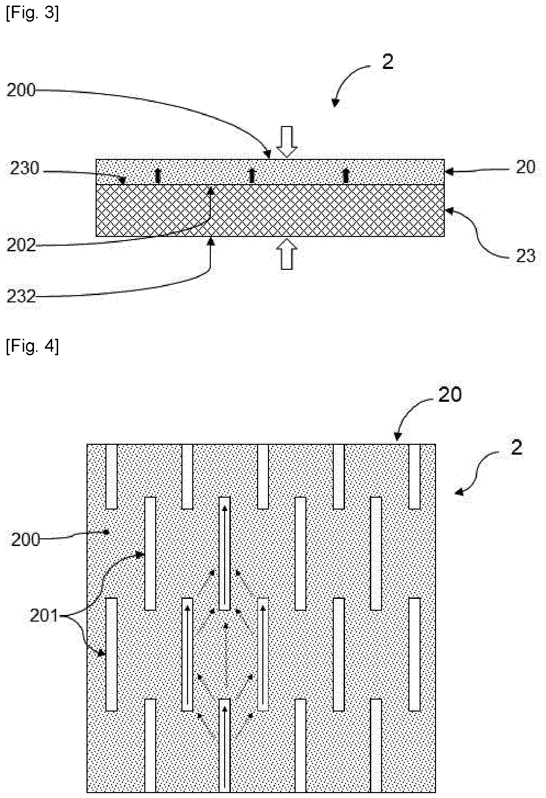

Pour obtenir la superposition, on superpose une couche 20 à porosité ouverte et électriquement conductrice, avec une couche de matériau composite 23 incluant des fibres conductrices enrobées d'une résine polymérisable (par exemple sous forme de fibres préimprégnées). On applique ensuite une pression homogène sur cette superposition (illustrée par les flèches à fond blanc) selon une direction perpendiculaire aux faces 200 et 232, comme illustré à la figure 3. La pression appliquée est avantageusement comprise entre 0,5 et 1,5 MPa. Cette compression permet d'assurer l'interconnexion électrique des fibres par pénétration de ces fibres dans la face 202 de la couche 20, en garantissant ainsi à la fois un contact mécanique et électrique entre ces fibres et la couche 20.

La compression permet également d'obtenir un fluage (illustré par les flèches à fond plein) de la résine polymérisable contenue dans la couche 23, vers la couche poreuse 20 selon une direction parallèle à la direction de la pression exercée. La résine fluant verticalement de la couche 23 vers la couche 20 n'imprègne avantageusement pas tout le volume de la couche 20. La résine fluant verticalement de la couche 23 dans la couche 20 traverse ici la face 202 sans toutefois atteindre la face externe opposée 200 de la couche 20. La couche 20 peut ainsi encore participer à l'écoulement de fluide à travers sa porosité ouverte, dans toutes les zones non imprégnées de résine.

On peut par exemple prévoir que le volume de la couche 20 soit supérieur à celui de la couche 23. Dès lors, la couche 23 n'aura alors pas une quantité suffisante de résine pouvant fluer pour imprégner tout le volume de la couche poreuse conductrice 20.

On maintient la compression sur la superposition et on procède à la polymérisation de la résine après son fluage. La couche 23 contenant initialement la résine polymérisable forme une couche composite solidifiée et conductrice électriquement. Les excès de résine ayant flué de la couche 23 vers la couche 20 à travers la face 202 forment la couche 209 conductrice électriquement, solidifiée par la résine polymérisée après son fluage. La couche 20 conserve sa porosité ouverte à l'extrémité externe supérieure du dispositif 2. En particulier, la résine n'atteint pas la face 200 de la couche 20.

On procède ensuite à la réalisation de l'évidement 201 sur la face 200 de la couche 20, selon une direction perpendiculaire au plan de la coupe représentée. Cette étape de formation de l'évidement 201 peut par exemple être réalisée par usinage mécanique. L'évidement 201 est avantageusement traversant entre les faces 200 et 202. Dans l'exemple illustré, plusieurs évidements 201 sont ménagés dans la couche 20, de façon répartie sur sa surface. Les évidements 201 peuvent également être ménagés dans la couche 20 préalablement à sa superposition avec la couche 23.

La figure 4 représente une vue de dessus partielle d'une variante du dispositif de diffusion gazeuse 2 décrit précédemment. Des évidements 201 sont pratiqués sur la face 200 de la couche 20. Les évidements 201 présentent chacun un contour fermé. On force ainsi l'écoulement de réactif à traverser la porosité ouverte de la couche 20, pour éviter de trop grandes disparités de pertes de charge à l'écoulement de réactif à travers cette couche 20. Les évidements 201 sont avantageusement traversants entre les faces externes supérieure 200 et inférieure (non représentée) de la couche 20 pour permettre une grande section de passage de réactif. Les évidements 201 sont avantageusement disjoints et présentent par exemple la forme de rainures rectilignes parallèles, de longueur constante. Les rainures peuvent être obtenues avantageusement par un procédé d'usinage ou par ablation laser ou encore par tout autre procédé de découpe. L'ablation laser permet notamment de former des coques pour évider un fluage intempestif ultérieur de résine. Les rainures forment ainsi des canaux d'écoulement discontinus. Les canaux discontinus permettent également de conserver une rigidité de la couche 20 suffisante, en particulier si ces rainures sont réalisées préalablement à l'assemblage des couches 20 et 23. Les dispersions des dimensions des rainures peuvent également être réduites. La largeur des rainures est ainsi typiquement inférieure à 0,4 mm, et avantageusement inférieure à 0,2 mm.

L'écoulement des fluides s'effectue pour partie dans les évidements 201 formés (selon les flèches rectilignes en trait plein représentées à la figure 4) et pour partie à travers la matière de la couche poreuse 20 (selon les flèches rectilignes en trait pointillé représentées à la figure 4). La couche 20 est par exemple en mousse, feutre ou tissu.

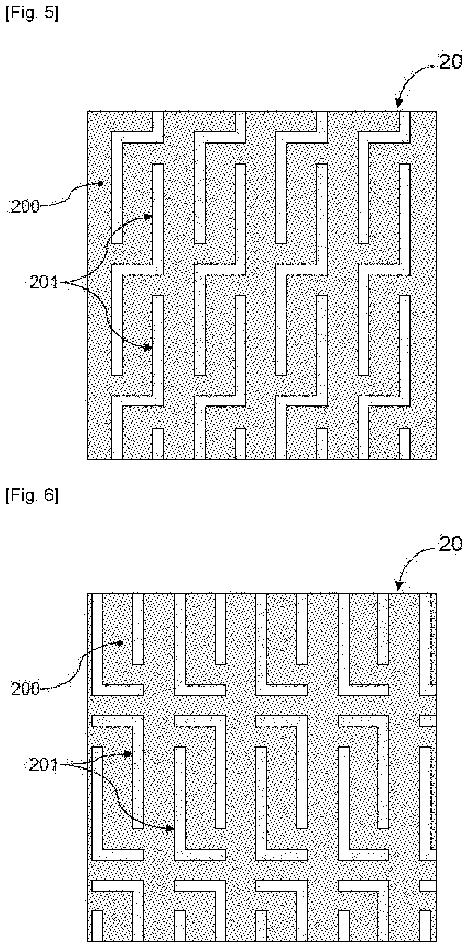

La figure 5 représente une vue de dessus partielle d'une face externe supérieure 200 d'une couche poreuse conductrice électriquement 20, présentant des évidements 201 selon une autre variante de l'exemple illustratif. Les évidements 201 présentent chacun un contour fermé et peuvent par exemple être traversants entre les faces externes supérieure 200 et inférieure (non représentée) de la couche 20.

Dans cette variante, les évidements 201 présentent avantageusement une forme de Z, les angles du Z formant un angle de 90°. Les évidements 201 ainsi formés sont par exemple alignés les uns par rapport aux autres sur la surface 200 selon les directions longitudinale d'une part et transversale d'autre part.

La figure 6 représente une vue de dessus partielle d'une face externe supérieure 200 d'une couche poreuse conductrice électriquement 20, présentant des évidements 201 selon une autre variante de l'exemple illustratif. Les évidements 201 présentent chacun un contour fermé et peuvent par exemple être traversants entre les faces externes supérieure 200 et inférieure (non représentée) de la couche 20.

Dans cette variante, les évidements 201 présentent avantageusement une forme de L. Les évidements 201 ainsi formés sont par exemple groupés par paires avec un axe de symétrie entre ceux-ci. Les différentes paires sont avantageusement alignées les unes par rapport aux autres sur la surface 200 selon les directions longitudinale d'une part et transversale d'autre part.

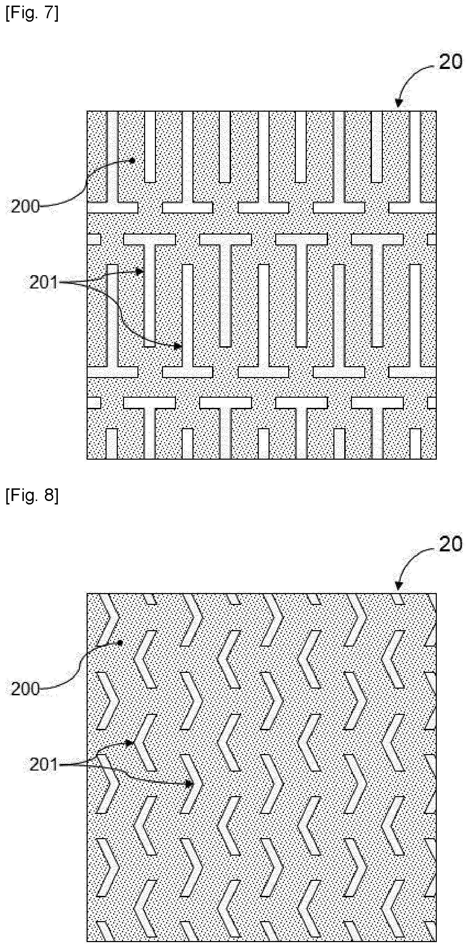

La figure 7 représente une vue de dessus partielle d'une face externe supérieure 200 d'une couche poreuse conductrice électriquement 20, présentant des évidements 201 selon une autre variante. Les évidements 201 présentent chacun un contour fermé et peuvent par exemple être traversants entre les faces externes supérieure 200 et inférieure (non représentée) de la couche 20.

Dans cette variante, les évidements 201 présentent avantageusement une forme de T. Les évidements 201 ainsi formés sont par exemple groupés par paires avec un axe de symétrie entre ceux-ci. Les différentes paires sont avantageusement alignées les unes par rapport aux autres sur la surface 200 selon les directions longitudinale d'une part et transversale d'autre part.

La figure 8 représente une vue de dessus partielle d'une face externe supérieure 200 d'une couche poreuse conductrice électriquement 20, présentant des évidements 201 selon une autre variante de l'exemple illustratif. Les évidements 201 présentent chacun un contour fermé et peuvent par exemple être traversants entre les faces externes supérieure 200 et inférieure (non représentée) de la couche 2.

Dans cette variante, les évidements 201 présentent avantageusement une forme de chevron. Les évidements 201 ainsi formés sont ici alignés longitudinalement en rangées, deux rangées adjacentes étant décalées longitudinalement.

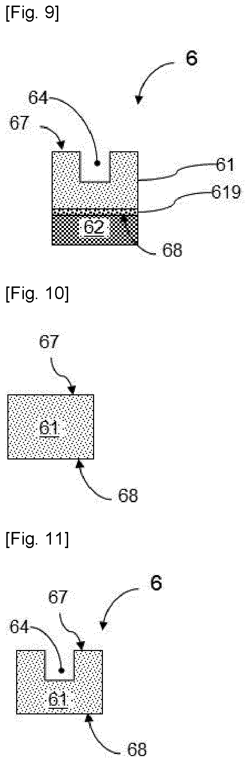

La figure 9 est une vue en coupe partielle d'un dispositif de diffusion gazeuse 6, selon un autre exemple illustratif. Le dispositif 6 inclut une couche poreuse et électriquement conductrice 61 présentant :
- une face inférieure 68 ;
- un évidement 64 pratiqué dans une face supérieure 67 ;
- une zone 619 d'épaisseur inférieure à l'épaisseur totale de la couche 61 et n'atteignant avantageusement pas la surface de l'évidement 64. La face inférieure de la zone 619 est la face 68, contenant une résine polymérisée.
La couche poreuse 61 présente avantageusement une épaisseur inférieure à 0,5 mm.

Le dispositif 6 inclut également une couche de matériau composite 62 formée de fibres conductrices électriquement. La résine et les fibres peuvent être du même type que décrit pour le premier exemple illustratif. La résine étant polymérisée, la couche 23 forme une couche composite rigide. La couche composite 62 est conductrice électriquement dans son épaisseur.

Le dispositif 6 est rigide, conducteur et d'un seul tenant. Le dispositif 6 est formé d'une superposition des éléments précédemment décrits :
- la couche poreuse 61 est située à une extrémité externe de l'empilement, présentant un évidement 64 libre ;
- la couche composite 62 est située à une extrémité externe opposée de l'empilement.

Pour obtenir la superposition, on peut fournir au préalable une couche poreuse et conductrice électriquement 61, dont une vue en coupe est présentée figure 10. La couche 61 présente une porosité ouverte entre une face 67 et une face 68.

On obtient la configuration représentée à la figure 11 en formant un évidement 64 au niveau de la face externe 67 de l'élément 61. Cette étape de formation de l'évidement 64 peut par exemple être réalisée par usinage mécanique.

On vient ensuite positionner une couche de matériau composite 62 en contact avec la face 68 de la couche 61, et donc à l'opposée de l'évidement 64. La couche 62 inclut des fibres conductrices électriquement ; une résine polymérisable (non représentée) imprègne les fibres. On obtient la configuration représentée en figure 12, avec la superposition des couches 61 et 62.

Comme illustré à la figure 13, on applique alors au dispositif 6 une pression homogène (illustrée par les flèches à fond blanc) selon une direction perpendiculaire aux surfaces 67 et 68 de la couche 61. Cette compression permet d'assurer l'interconnexion électrique des fibres par pénétration de ces fibres dans la surface 68 de la couche 61, en garantissant ainsi à la fois un contact mécanique et électrique entre ces fibres et la couche 61. La compression permet également d'obtenir un fluage de la résine (illustré par les flèches à fond plein) contenue dans la couche 62 vers la couche poreuse 61, selon une direction parallèle à la direction de la pression exercée. La résine fluant verticalement de la couche 62 vers la couche 61 n'imprègne pas tout le volume de la couche 61. On peut par exemple prévoir que le volume de la couche 61 soit supérieur à celui de la couche 62. En effet, la couche 62 n'aura alors pas une quantité suffisante de résine pouvant fluer pour imprégner tout le volume de la couche 61. La résine fluant verticalement de la couche 62 vers la couche 61 traverse ici la face 68 sans toutefois atteindre la face externe opposée 67 de la couche 61. L'évidement 64 ne se remplit avantageusement pas de résine, ce qui permet ensuite de réaliser un écoulement de réactif à travers cet évidement 64. On maintient la compression sur la superposition et on procède à la polymérisation de la résine après son fluage.

La figure 14 présente une vue en coupe partielle d'un dispositif de diffusion gazeuse 2 rigide, conducteur et d'un seul tenant, selon un mode de réalisation de l'invention. Le dispositif inclut une couche poreuse électriquement conductrice 20 présentant des évidements 201 pratiqués dans une face externe supérieure 200 ; la couche 20 présente également une face inférieure 202. Les évidements 201 sont avantageusement traversants entre les faces 200 et 202.

Le dispositif 2 inclut également une couche de matériau composite 23 présentant une structure similaire à celle des exemples illustratifs. La couche 23 présente une face supérieure 230 et une face inférieure opposée 232. Une résine polymérisée enrobe les fibres.

Le dispositif 2 inclut également une couche électriquement conductrice dans son épaisseur 21 présentant des évidements 211 pratiqués dans une face supérieure 210 de la couche 21. La couche 21 peut présenter la même structure et la même composition que la couche 20. La couche 21 présente une face inférieure 212. Les évidements 211 sont remplis de la résine polymérisée s'étendant jusqu'à la couche 20. La couche 21 est elle-même au moins partiellement imprégnée de résine polymérisée.

Dans le dispositif 2, les faces 202 et 210 sont en contact. Les faces 212 et 230 sont également en contact. La couche 21 est donc interposée entre les couches 20 et 23. Au droit de l'évidement 211 rempli de résine polymérisée, la couche 20 présente avantageusement une zone 208 de résine polymérisée et solidifiée. La résine ayant flué à travers l'évidement 211 permet ainsi d'assurer une liaison mécanique entre les couches 20 et 23. Par ailleurs, l'évidement 211 favorise le fluage de la résine polymérisable, là où la matière de la couche 21 freine ce fluage. Par conséquent, la résine n'imprègne que la zone 208 de la couche 20, sans remplir les évidements 201. L'écoulement de réactif à travers la couche 20 est ainsi favorisé, à travers sa porosité ouverte et ses évidements 201. Avantageusement, seulement une partie du volume de la couche 21 est imprégné de résine, de sorte que cette couche 21 peut également être traversée par un écoulement de réactif.

Pour obtenir le dispositif de diffusion gazeuse 2 de ce mode de réalisation, on superpose une couche 20 à porosité ouverte et électriquement conductrice avec des évidements 201, une couche 21 à porosité ouverte et électriquement conductrice avec des évidements 211, et une couche de matériau composite 23 incluant des fibres conductrices enrobées d'une résine polymérisable.

On applique ensuite une pression homogène sur la superposition (illustrée par les flèches à fond blanc) selon une direction perpendiculaire aux faces 200 de la couche 20 et 232 de la couche 23, comme illustré à la figure 15. La pression appliquée est avantageusement comprise entre 0,5 et 1,5 MPa. Cette compression permet d'assurer l'interconnexion électrique des fibres de carbone de la couche 23 par pénétration de ces fibres dans la face 212 de la couche 21, en garantissant ainsi à la fois un contact mécanique et électrique entre ces fibres et la couche 23. La compression permet également d'assurer l'interconnexion électrique par contact de la couche 21 avec la couche 20, au niveau respectivement des faces 210 et 202.

La compression permet d'obtenir un fluage (illustré par les flèches à fond plein) de la résine polymérisable contenue dans la couche 23 vers les couches poreuses 20 et 21 selon une direction parallèle à la direction de la pression exercée. La résine fluant verticalement de la couche 23 vers la couche 20 à travers la couche 21 n'imprègne avantageusement pas tout le volume de la couche 20. La résine fluant verticalement de la couche 23 dans la couche 21 traverse ici la face 212 pour atteindre la face externe opposée 210 de la couche 21. La résine fluant verticalement de la couche 21 dans la couche 20 traverse ici la face 202 sans toutefois atteindre la face externe opposée 200 de la couche 20.

On maintient la compression sur la superposition et on procède à la polymérisation de la résine après son fluage. La couche 23 contenant initialement la résine polymérisable forme une couche composite solidifiée et conductrice électriquement. Les excès de résine ayant flué de la couche 23 vers la couche 21 forment une couche solidifiée.

Les excès de résine ayant flué de la couche 23 dans la couche 20 à travers la couche 21 se concentrent à l'interface entre la couche 20 et l'évidement 211 pour former une zone 208 solidifiée. Enfin, la couche 20 est conservée poreuse à l'extrémité externe supérieure du dispositif 2.

La figure 16 représente une vue de dessus partielle de la face externe supérieure 200 de la couche poreuse conductrice électriquement 20, présentant les évidements 201 selon une variante du mode de réalisation. Les évidements 201 présentent chacun un contour fermé et peuvent par exemple être traversants entre les faces externes supérieure 200 et inférieure (non représentée) de la couche 20.

Dans cette variante, les évidements 201 sont avantageusement disjoints. Les rainures forment ainsi des canaux d'écoulement discontinus. La largeur de ces rainures est ainsi typiquement inférieure à 0,4 mm, et avantageusement inférieure à 0,2 mm.

Les évidements 211 sont représentés sur la figure 16 en transparence, par exemple parallèles aux évidements 201 précédemment décrits. Les couches 20 et 21 sont ici placées l'une par rapport à l'autre de façon à ce que les évidements 201 et 211 ne soient pas superposés. La résine fluant à travers les évidements 211 vient ainsi former des liaisons mécaniques avec la couche 20, sans altérer l'écoulement de réactif dans les évidements 201.

Dans une autre variante illustrée à la figure 17, les évidements 201 et 211 sont disjoints. La figure 17 représente une vue de dessus partielle d'une face externe supérieure 200 d'une couche poreuse conductrice électriquement 20. Les évidements 201 et 211 présentent chacun un contour fermé et sont traversants.

Les évidements 201 et 211 sont ici partiellement superposés. On peut ainsi former des canaux continus mais tortueux pour l'écoulement des réactifs à travers les couches 20 et 21. Les évidements 201 et 211 peuvent être allongés selon des directions perpendiculaires.

Les configurations des évidements décrites en référence aux figures 4 à 9 peuvent également être utilisées.

La figure 18 présente une vue en coupe partielle d'un dispositif de diffusion gazeuse 2 rigide et conducteur, selon un deuxième mode de réalisation. Le dispositif inclut une couche poreuse électriquement conductrice 20 présentant des évidements 201 pratiqués dans une face externe supérieure 200 ; la couche 20 présente également une face inférieure 202. Les évidements 201 sont traversants entre les faces 200 et 202.

Le dispositif inclut également une couche de matériau composite 23, telle que décrite en référence au mode de réalisation précédent et en référence aux exemples illustratifs.

Le dispositif inclut également des couches 21 et 22, interposées entre les couches 20 et 23. Les couches 21 et 22 peuvent présenter la même structure et la même composition que la couche 20. La couche 21 est électriquement conductrice dans son épaisseur et présente des évidements 211 pratiqués dans une face supérieure 210. La couche 21 présente également une face inférieure 212. Les évidements 211 sont avantageusement remplis de résine polymérisée. La couche 22 est électriquement conductrice dans son épaisseur et présente des évidements 221 pratiqués dans une face supérieure 220. La couche 22 présente également une face inférieure 222. Les évidements 221 sont avantageusement remplis de résine polymérisée. Les évidements 221 sont au moins partiellement superposés avec les évidements 211 précédemment décrits. La résine ayant flué à travers les évidements 211 et 221 permet ainsi de solidariser les couches 20 et 23.

Au droit de l'évidement 211 rempli de résine polymérisée, la couche 20 présente avantageusement une zone 208 de résine polymérisée et solidifiée. En dehors de cette zone 208, la couche 20 ne présente avantageusement pas de zone contenant de la résine polymérisée.

La figure 19 est une vue en coupe partielle d'un système électrochimique 700 pouvant inclure des dispositifs de diffusion gazeuse selon l'invention. Le système électrochimique 700 inclut :
- un dispositif de diffusion gazeuse 8 ;
- un dispositif de diffusion gazeuse 9 ;
- un assemblage membrane-électrode 7 disposé entre les dispositifs 8 et 9.

Le dispositif 8 est formé d'un empilement de :
- une couche poreuse et conductrice électriquement 80, incluant une zone 812 imprégnée de résine polymérisée et solidifiée ;
- une couche poreuse et conductrice électriquement 82, incluant des zones 813 et 832 imprégnées de résine polymérisée et solidifiée ;
- une couche poreuse et conductrice électriquement 84, incluant une zone 833 imprégnée de résine polymérisée et solidifiée ;
- une couche de matériau composite 81 disposée entre les couches 80 et 82 ;
- une couche de matériau composite 83 disposée entre les couches 82 et 84.

Les couches de matériau composite 81 et 83 incluent des fibres conductrices électriquement enrobées d'une résine polymérisée.

Le dispositif de diffusion gazeuse 8 forme ici une plaque bipolaire dans le cadre de son utilisation au sein d'une pile à combustible.

Le dispositif 9 est formé d'un empilement de :
- une couche poreuse et conductrice électriquement 90, incluant une zone 912 imprégnée de résine polymérisée et solidifiée ;
- une couche poreuse et conductrice électriquement 92, incluant des zones 913 et 932 imprégnées de résine polymérisée et solidifiée ;
- une couche poreuse et conductrice électriquement 94, incluant une zone 933 imprégnée de résine polymérisée et solidifiée ;
- une couche de matériau composite 91 disposée entre les couches 90 et 92 ;
- une couche de matériau composite 93 disposée entre les couches 92 et 94.

Les couches de matériau composite 91 et 93 incluent des fibres conductrices électriquement enrobées d'une résine polymérisée.

Le dispositif de diffusion gazeuse 9 forme ici une plaque bipolaire dans le cadre de son utilisation au sein d'une pile à combustible.

Les plaques bipolaires 8 et 9 permettent des écoulements de réactifs différents au niveau de leurs faces externes, et permettent un écoulement de fluide de refroidissement dans leur partie interne.

L'assemblage membrane-électrode 7 est formé de :
- une couche microporeuse anodique 70 ;
- une couche microporeuse cathodique 72 ;
- une membrane échangeuse de protons 71 placée entre les couches 70 et 72.

L'assemblage 7 permet d'assurer la circulation des protons entre 2 plaques bipolaires dans le cadre de son utilisation au sein d'une pile à combustible.

Pour obtenir cette configuration, après avoir formé une superposition de couches appropriée, on applique une pression homogène (illustrée par les flèches à fond blanc) à cette superposition selon une direction perpendiculaire aux faces externes, comme illustré à la figure 20. Cette compression permet d'assurer l'interconnexion électrique des fibres présentes en surface sur les faces des couches 81, 83, 91 et 93 par pénétration de ces fibres dans les faces des couches poreuses 80, 82, 84, 90, 92 et 94, en garantissant ainsi à la fois un contact mécanique et électrique entre ces fibres et les couches poreuses.

La compression permet également d'obtenir un fluage vertical de la résine (illustré par les flèches à fond plein) contenue dans la couche 81 vers les couches poreuses 80 et 82 selon une direction parallèle à la direction de la pression exercée. La résine fluant verticalement de la couche 81 vers les couches 80 et 82 n'imprègne pas tout le volume des couches 80 et 82. On peut par exemple prévoir que le volume des couches 80 et 82 soit supérieur à celui de la couche 81. En effet, la couche 81 n'aura alors pas une quantité suffisante de résine pouvant fluer pour imprégner tout le volume des couches poreuses conductrices 80 et 82.

La compression permet également d'obtenir un fluage vertical de la résine (illustré par les flèches à fond plein) contenue dans la couche 83 vers les couches poreuses 82 et 84 selon une direction parallèle à la direction de la pression exercée. La résine fluant verticalement de la couche 83 vers les couches 82 et 84 n'imprègne pas tout le volume des couches 82 et 84. On peut par exemple prévoir que le volume des couches 82 et 84 soit supérieur à celui de la couche 83. En effet, la couche 83 n'aura alors pas une quantité suffisante de résine pouvant fluer pour imprégner tout le volume des couches poreuses conductrices 82 et 84.

La compression permet également d'obtenir un fluage vertical de la résine (illustré par les flèches à fond plein) contenue dans la couche 91 vers les couches poreuses 90 et 92 selon une direction parallèle à la direction de la pression exercée. La résine fluant verticalement de la couche 91 vers les couches 90 et 92 n'imprègne pas tout le volume des couches 90 et 92. On peut par exemple prévoir que le volume des couches 90 et 92 soit supérieur à celui de la couche 91. En effet, la couche 91 n'aura alors pas une quantité suffisante de résine pouvant fluer pour imprégner tout le volume des couches poreuses conductrices 90 et 92.

La compression permet enfin d'obtenir un fluage de la résine (illustré par les flèches à fond plein) contenue dans la couche 93 vers les couches poreuses 92 et 94 selon une direction parallèle à la direction de la pression exercée.

On maintient la compression et on procède à la polymérisation de la résine après son fluage. On obtient la configuration précédemment décrite.

La couche 81 contenant initialement la résine polymérisable forme une couche composite solidifiée et conductrice électriquement. Les excès de résine ayant flué de la couche 81 dans les couches 80 et 82 forment des zones solidifiées par la résine polymérisée après son fluage.

La couche 83 contenant initialement la résine polymérisable forme une couche composite solidifiée et conductrice électriquement. Les excès de résine ayant flué de la couche 83 dans les couches 84 et 82 forment des zones solidifiées par la résine polymérisée après son fluage.

La couche 91 contenant initialement la résine polymérisable forme une couche composite solidifiée et conductrice électriquement. Les excès de résine ayant flué de la couche 91 dans les couches 90 et 92 forment des zones solidifiées par la résine polymérisée après son fluage.

La couche 93 contenant initialement la résine polymérisable forme une couche composite solidifiée et conductrice électriquement. Les excès de résine ayant flué de la couche 93 dans les couches 94 et 92 forment des zones solidifiées par la résine polymérisée après son fluage.

Le système peut avantageusement être utilisé dans le cadre d'un assemblage visant à constituer une pile à combustible, du fait qu'il permet à la fois la circulation des fluides de réaction au niveau des dispositifs de diffusion gazeuse qui le composent, et le transfert d'électrons au niveau de l'assemblage membrane-électrodes.

## Revendications

1. Dispositif de diffusion gazeuse (2), **caractérisé en ce qu'**il comprend une superposition de :
- une couche de matériau composite (23) incluant des fibres conductrices électriquement et une résine polymérisée enrobant lesdites fibres conductrices ;
- une première couche (20) conductrice électriquement présentant une porosité ouverte entre des première et deuxième faces et comportant un premier évidement (201) au niveau de la deuxième face (200), la première face (202) étant en contact électrique avec les fibres conductrices de la couche de matériau composite (23), la résine polymérisée enrobant une partie de la première couche conductrice (20) au niveau de la première face (202) ;
- une deuxième couche conductrice (21) électriquement interposée entre la première couche conductrice (20) et ladite couche de matériau composite (23), ladite deuxième couche conductrice (21) présentant une porosité ouverte entre des première (212) et deuxième faces (210) et comportant un premier évidement (211) traversant entre ses première et deuxième faces, lesdites fibres conductrices étant en contact avec la première face (212) de la deuxième couche conductrice (21) ;
- ladite résine polymérisée traverse ledit premier évidement (211) de la deuxième couche conductrice (21) et s'étend jusqu'à travers la première face (202) de la première couche conductrice (20).

2. Dispositif de diffusion gazeuse (2) selon la revendication 1, dans lequel ledit premier évidement (201) de la première couche (20) présente un contour fermé.

3. Dispositif de diffusion gazeuse (2) selon la revendication 1 ou 2, dans lequel ladite première couche conductrice (20) présente d'autres évidements (201) au niveau de la deuxième face, ces évidements étant disjoints.

4. Dispositif de diffusion gazeuse (2) selon l'une quelconque des revendications précédentes, dans lequel le premier évidement (201) de la première couche conductrice (20) et le premier évidement (211) de la deuxième couche conductrice (21) ne sont pas superposés.

5. Dispositif de diffusion gazeuse (2) selon la revendication 4, dans lequel la deuxième couche conductrice (21) comporte un deuxième évidement (211) superposé au moins partiellement avec le premier évidement (201) de la première couche conductrice (20).

6. Dispositif de diffusion gazeuse (2) selon l'une quelconque des revendications précédentes, dans lequel ladite superposition comprend une troisième couche conductrice électriquement, présentant une porosité ouverte entre des première et deuxième faces, et comportant un premier évidement traversant entre ses première et deuxième faces, la première couche conductrice (20) étant interposée entre les deuxième (21) et troisième couches conductrices, ladite première couche comportant un deuxième évidement superposé avec le premier évidement de la deuxième couche, ladite résine polymérisée traverse ledit deuxième évidement de la première couche conductrice s'étend jusqu'à travers la première face de la troisième couche conductrice.

7. Dispositif de diffusion gazeuse (2) selon l'une quelconque des revendications 1 à 5, dans lequel ladite résine n'atteint pas ladite deuxième face (200) de la première couche conductrice (20).

8. Dispositif de diffusion gazeuse (2) selon l'une quelconque des revendications précédentes, dans lequel ladite première couche conductrice (20) est une couche de mousse, de feutre ou de tissu.

9. Dispositif de diffusion gazeuse (2) selon l'une quelconque des revendications précédentes, dans lequel ladite résine est une résine phénolique.

10. Dispositif de diffusion gazeuse (2) selon l'une quelconque des revendications précédentes, dans lequel le premier évidement (201) de la première couche conductrice (20) est traversant.

11. Dispositif de diffusion gazeuse (2) selon l'une quelconque des revendications précédentes, dans lequel le premier évidement (201) de la première couche conductrice (20) présente une forme de rainure d'une largeur inférieure à 0,4 mm.

12. Dispositif de diffusion gazeuse (2) selon l'une quelconque des revendications précédentes, dans lequel la première couche conductrice (20) présente une épaisseur inférieure à 0,5mm.

13. Système électrochimique (700), incluant :
- des premier (8) et deuxième (9) dispositifs de diffusion gazeuse selon l'une quelconque des revendications précédentes ;
- un assemblage membrane/électrodes (7) incluant une membrane échangeuse de protons (71), ledit assemblage étant disposé entre lesdits premier (8) et deuxième (9) dispositifs de diffusion gazeuse.

14. Procédé de fabrication d'un dispositif de diffusion gazeuse (2), comprenant les étapes de :
- fournir la superposition d'une couche de matériau composite (23), d'une première couche conductrice électriquement (20) et d'une deuxième couche conductrice électriquement (21), la deuxième couche conductrice électriquement (21) étant interposée entre la première couche conductrice (20) et ladite couche de matériau composite (23), la couche de matériau composite (23) incluant des fibres conductrices électriquement et une résine polymérisable imprégnant lesdites fibres conductrices, ladite première couche conductrice (20) présentant une porosité ouverte entre des première (202) et deuxième (200) faces, ladite deuxième couche conductrice (21) présentant une porosité ouverte entre des première (212) et deuxième faces (210) et
comportant un premier évidement (211) traversant entre ses première et deuxième faces, ;
- comprimer la couche de matériau composite (23) de façon à mettre en contact électrique lesdites fibres conductrices avec la première face (202) de ladite première couche conductrice (20), et de façon à faire fluer ladite résine à travers la première face (202) de la première couche conductrice (20), et de façon à mettre les fibres conductrices en contact avec la première face (212) de la deuxième couche conductrice (21), et de façon à faire fluer ladite résine à travers le premier évidement (211) de la deuxième couche conductrice (21) jusqu'à travers la première face de la première couche conductrice (20) ;
- polymériser la résine ayant flué ;
- former un premier évidement (201) au niveau de la deuxième face (200) de ladite première couche conductrice.

15. Procédé de fabrication selon la revendication 14, dans lequel ladite compression de la superposition est mise en œuvre avec une pression comprise entre 0,5 et 1,5 MPa.

16. Procédé de fabrication selon la revendication 14 ou 15, dans lequel ledit premier évidement (201) formé est traversant entre les première et deuxième faces de ladite première couche conductrice (20).

## Patentansprüche

1. Gasdiffusionsvorrichtung (2), **dadurch gekennzeichnet, dass** sie eine Überlagerung von Folgendem umfasst:
- einer Verbundmaterialschicht (23), die elektrisch leitende Fasern und ein polymerisiertes Harz, das die leitenden Fasern umschließt, aufweist;
- eine erste elektrisch leitende Schicht (20), die eine offene Porosität zwischen einer ersten und zweiten Seite aufweist und eine erste Ausnehmung (201) an der zweiten Seite (200) aufweist, wobei die erste Seite (202) mit den leitenden Fasern der Verbundmaterialschicht (23) in elektrischem Kontakt steht, wobei das polymerisierte Harz einen Abschnitt der ersten leitenden Schicht (20) an der ersten Seite (202) umschließt;
- eine zweite elektrisch leitende Schicht (21), die elektrisch zwischen der ersten leitenden Schicht (20) und der Verbundmaterialschicht (23) angeordnet ist, wobei die zweite leitende Schicht (21) eine offene Porosität zwischen einer ersten (212) und zweiten Seite (210) aufweist und eine erste durchgehende Ausnehmung (211) zwischen ihrer ersten und zweiten Seite aufweist, wobei die leitenden Fasern mit der ersten Seite (212) der zweiten leitenden Schicht (21) in Kontakt stehen;
- wobei das polymerisierte Harz durch die erste Ausnehmung (211) der zweiten leitenden Schicht (21) hindurchgeht und sich bis durch die erste Seite (202) der ersten leitenden Schicht (20) erstreckt.

2. Gasdiffusionsvorrichtung (2) nach Anspruch 1, wobei die erste Ausnehmung (201) der ersten Schicht (20) eine geschlossene Kontur aufweist.

3. Gasdiffusionsvorrichtung (2) nach Anspruch 1 oder 2, wobei die erste leitende Schicht (20) andere Ausnehmungen (201) an der zweiten Seite aufweist, wobei diese Ausnehmungen getrennt sind.

4. Gasdiffusionsvorrichtung (2) nach einem der vorhergehenden Ansprüche, wobei die erste Ausnehmung (201) des ersten leitenden Schicht (20) und die erste Ausnehmung (211) der zweiten leitenden Schicht (21) nicht übereinander gelagert sind.

5. Gasdiffusionsvorrichtung (2) nach Anspruch 4, wobei die zweite leitende Schicht (21) eine zweite Ausnehmung (211) aufweist, die wenigstens teilweise mit der ersten Ausnehmung (201) der ersten leitenden Schicht (20) überlagert ist.

6. Gasdiffusionsvorrichtung (2) nach einem der vorhergehenden Ansprüche, wobei die Überlagerung eine dritte elektrisch leitende Schicht umfasst, die eine offene Porosität zwischen einer ersten und zweiten Seite aufweist und eine erste durchgehende Ausnehmung zwischen ihrer ersten und zweiten Seite aufweist, wobei die erste leitende Schicht (20) zwischen der zweiten (21) und dritten leitenden Schicht angeordnet ist, wobei die erste Schicht eine zweite Ausnehmung aufweist, die mit der ersten Ausnehmung der zweiten Schicht überlagert ist, das polymerisierte Harz durch die zweite Ausnehmung der ersten leitenden Schicht hindurchgeht, sich bis durch die erste Seite der dritten leitenden Schicht erstreckt.

7. Gasdiffusionsvorrichtung (2) nach einem der Ansprüche 1 bis 5, wobei das Harz die zweite Seite (200) der ersten leitenden Schicht (20) nicht erreicht.

8. Gasdiffusionsvorrichtung (2) nach einem der vorhergehenden Ansprüche, wobei die erste leitende Schicht (20) eine Schaum-, Filz- oder Stoffschicht ist.

9. Gasdiffusionsvorrichtung (2) nach einem der vorhergehenden Ansprüche, wobei das Harz ein Phenolharz ist.

10. Gasdiffusionsvorrichtung (2) nach einem der vorhergehenden Ansprüche, wobei die erste Ausnehmung (201) der ersten leitenden Schicht (20) durchgehend ist.

11. Gasdiffusionsvorrichtung (2) nach einem der vorhergehenden Ansprüche, wobei die erste Ausnehmung (201) der ersten leitenden Schicht (20) eine Rillenform einer Breite unter 0,4 mm aufweist.

12. Gasdiffusionsvorrichtung (2) nach einem der vorhergehenden Ansprüche, wobei die erste leitende Schicht (20) eine Dicke unter 0,5 mm aufweist.

13. Elektrochemisches System (700), aufweisend:
- eine erste (8) und zweite (9) Gasdiffusionsvorrichtung nach einem der vorhergehenden Ansprüche;
- eine Membran-Elektroden-Anordnung (7) mit einer Protonenaustauschmembran (71), wobei die Anordnung zwischen der ersten (8) und zweiten (9) Gasdiffusionsvorrichtung angeordnet ist.

14. Verfahren zur Herstellung einer Gasdiffusionsvorrichtung (2), umfassend die folgenden Schritte:
- Bereitstellen der Überlagerung einer Verbundmaterialschicht (23), einer ersten elektrisch leitenden Schicht (20) und einer zweiten elektrisch leitenden Schicht (21), wobei die zweite elektrisch leitende Schicht (21) zwischen der ersten leitenden Schicht (20) und der Verbundmaterialschicht (23) angeordnet ist, wobei die Verbundmaterialschicht (23) elektrisch leitende Fasern und ein polymerisierbares Harz, das die leitenden Fasern imprägniert, aufweist, wobei die erste leitende Schicht (20) eine offene Porosität zwischen einer ersten (202) und zweiten (200) Seite aufweist, wobei die zweite leitende Schicht (21) eine offene Porosität zwischen einer ersten (212) und zweiten Seite (210) aufweist und eine erste durchgehende Ausnehmung (211) zwischen ihrer ersten und zweiten Seite aufweist;
- Komprimieren der Verbundmaterialschicht (23), um die leitenden Fasern mit der ersten Seite (202) der ersten leitenden Schicht (20) in elektrischen Kontakt zu bringen und das Harz durch die erste Seite (202) der ersten leitenden Schicht (20) fließen zu lassen und die leitenden Fasern mit der ersten Seite (212) der zweiten leitenden Schicht (21) in Kontakt zu bringen und das Harz durch die erste Ausnehmung (211) der zweiten leitenden Schicht (21) bis durch die erste Seite der ersten leitenden Schicht (20) fließen zu lassen;
- Polymerisieren des geflossenen Harzes;
- Bilden einer ersten Ausnehmung (201) an der zweiten Seite (200) der ersten leitenden Schicht.

15. Herstellungsverfahren nach Anspruch 14, wobei das Komprimieren der Überlagerung mit einem Druck zwischen 0,5 und 1,5 MPa durchgeführt wird.

16. Herstellungsverfahren nach Anspruch 14 oder 15, wobei die gebildete erste Ausnehmung (201) zwischen der ersten und zweiten Seite der ersten leitenden Schicht (20) durchgehend ist.

## Claims

1. Gas-diffusing device (2), **characterized in that** it comprises a superposition of:
- a layer of composite material (23) including electrically conductive fibres and a polymerized resin coating said conductive fibres;
- a first electrically conductive layer (20) having an open porosity between first and second faces and comprising a first void (201) in the second face (200), the first face (202) making electrical contact with the conductive fibres of the layer of composite material (23), the polymerized resin coating one portion of the first conductive layer (20) on the first face (202);
- a second electrically conductive layer (21) interposed between the first conductive layer (20) and said layer of composite material (23), said second conductive layer (21) having an open porosity between first and second faces (212, 210) and comprising a first through-void (211) between its first and second faces, said conductive fibres making contact with the first face (212) of the second conductive layer (21);
- said polymerized resin passes through said first void (211) of the second conductive layer (21) and extends as far as through the first face (202) of the first conductive layer (20).

2. Gas-diffusing device (2) according to Claim 1, wherein said first void (201) of the first layer (20) has a closed outline.

3. Gas-diffusing device (2) according to Claim 1 or 2, wherein said first conductive layer (20) has other voids (201) in the second face, these voids being separate.

4. Gas-diffusing device (2) according to any one of the preceding claims, wherein the first void (201) of the first conductive layer (20) and the first void (211) of the second conductive layer (21) are not superposed.

5. Gas-diffusing device (2) according to Claim 4, wherein the second conductive layer (21) comprises a second void (211) superposed at least partially with the first void (201) of the first conductive layer (20).

6. Gas-diffusing device (2) according to any one of the preceding claims, wherein said superposition comprises a third electrically conductive layer, having an open porosity between first and second faces, and comprising a first through-void between its first and second faces, the first conductive layer (20) being interposed between the second conductive layer (21) and the third conductive layer, said first layer comprising a second void superposed with the first void of the second layer, said polymerized resin passing through said second void of the first conductive layer extending as far as through the first face of the third conductive layer.

7. Gas-diffusing device (2) according to any one of Claims 1 to 5, wherein said resin does not reach said second face (200) of the first conductive layer (20).

8. Gas-diffusing device (2) according to any one of the preceding claims, wherein said first conductive layer (20) is a layer of foam, of felt or of fabric.

9. Gas-diffusing device (2) according to any one of the preceding claims, wherein said resin is a phenolic resin.

10. Gas-diffusing device (2) according to any one of the preceding claims, wherein the first void (201) of the first conductive layer (20) is a through-void.

11. Gas-diffusing device (2) according to any one of the preceding claims, wherein the first void (201) of the first conductive layer (20) takes the form of a groove of a width smaller than 0.4 mm.

12. Gas-diffusing device (2) according to any one of the preceding claims, wherein the first conductive layer (20) has a thickness smaller than 0.5 mm.

13. Electrochemical system (700), including:
- first and second gas-diffusing devices (8, 9) according to any one of the preceding claims;
- a membrane electrode assembly (7) including a proton-exchange membrane (71), said assembly being placed between said first and second gas-diffusing devices (8, 9).

14. Process for manufacturing a gas-diffusing device (2), comprising the steps of:
- providing the superposition of a layer of composite material (23), of a first electrically conductive layer (20) and of a second electrically conductive layer (21), the second electrically conductive layer (21) being interposed between the first conductive layer (20) and said layer of composite material (23), the layer of composite material (23) including electrically conductive fibres and a polymerizable resin impregnating said conductive fibres, said first conductive layer (20) having an open porosity between first and second faces (202, 200), said second conductive layer (21) having an open porosity between first and second faces (212, 210) and comprising a first through-void (211) between its first and second faces;
- compressing the layer of composite material (23) so as to bring said conductive fibres into electrical contact with the first face (202) of said first conductive layer (20), and so as to make said resin flow through the first face (202) of the first conductive layer (20), and so as to bring the conductive fibres into contact with the first face (212) of the second conductive layer (21), and so as to make said resin flow through the first void (211) of the second conductive layer (21) as far as through the first face of the first conductive layer (20);
- polymerizing the resin having flowed;
- forming a first void (201) in the second face (200) of said first conductive layer.

15. Manufacturing process according to Claim 14, wherein said superposition is compressed with a pressure comprised between 0.5 and 1.5 MPa.

16. Manufacturing process according to Claim 14 or 15, wherein said formed first void (201) is a through-void between the first and second faces of said first conductive layer (20).
